(19)

Europäisches
Patentamt
European
Patent Office
Office européen
des brevets

(11) **EP 2 369 758 A1**

(12) **EUROPEAN PATENT APPLICATION**

(43) Date of publication:
**28.09.2011 Bulletin 2011/39**

(51) Int Cl.:
*H04B 7/08* (2006.01)   *H04B 7/06* (2006.01)
*H04B 1/16* (2006.01)

(21) Application number: **10157049.7**

(22) Date of filing: **19.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Telefonaktiebolaget L M Ericsson (Publ)**
**164 83 Stockholm (SE)**

(72) Inventors:
• **Wallén, Anders**
  **SE-271 31, YSTAD (SE)**

• **Andersson, Lennart**
  **SE-269 92, BÅSTAD (SE)**
• **Reial, Andres**
  **SE-211 17, MALMÖ (SE)**
• **Rosenqvist, Anders**
  **SE-224 74, LUND (SE)**

(74) Representative: **Ström & Gulliksson AB**
**Box 4188**
**203 13 Malmö (SE)**

(54) **Control of multiple receive and transmit paths**

(57)   A radio-communication circuit (20, 20a, 20b) for a radio-communication apparatus (1, 2, 10) having a plurality of antennas (15a-n) for communication over spatially multiplexed channels is disclosed. The radio-communication circuit (20, 20a, 20b) comprises a plurality of signal paths (25a-n) for connection to the plurality of antennas (15a-n) of the radio-communication apparatus (1, 2, 10), wherein the signal paths (25a-n) are either receive or transmit paths, and each signal path (25a-n) has an enabled and a disabled mode. The radio-communication circuit (20, 20a, 20b) further comprises a control unit (35) for setting the mode of each of the signal paths (25a-n), wherein the control unit (35) is adapted to control which of the signal paths (25a-n) are set in the enabled mode at least based on an obtainable performance gain due to multi-antenna processing , such as an obtainable spatial multiplexing gain.

Fig. 2

EP 2 369 758 A1

**Description**

**Technical Field**

The present invention relates to control of multiple receive paths in a radio-receiver circuit. Furthermore, the present invention relates to control of multiple transmit paths in a radio-transmitter circuit.

**Background**

Multiple antennas, accompanied by corresponding multiple receive paths (or receive chains) and/or corresponding multiple transmit paths (or transmit chains) can be used in radio-communication systems to improve coverage, system capacity and peak rates. For example, in a cellular communication system, a radio base station may utilize multiple antennas, and corresponding transmit paths or receive paths, for one or both of its transmitter circuit and receiver circuit. Similarly, a mobile terminal for communication with said radio base station may also utilize multiple antennas for one or both of its transmitter circuit and receiver circuit. The channel properties between different transmit antennas of one radio-communication apparatus (e.g. radio base station or mobile terminal) and different receive antennas of another radio-communication apparatus (e.g. mobile terminal or radio base station) may differ both in terms of fading properties and interference. Multiple antennas (and corresponding transmit paths or receive paths) can be used to provide diversity gains, whereby the probability of deep signal fades is reduced, beam-forming gains, whereby virtual antenna lobes can be formed at the transmission side and/or at the reception side, and/or spatial multiplexing gains, whereby several data streams may be transmitted simultaneously via virtual parallel channels.

**Summary**

The inventors have realized that some currently known methods of operating radio-communication apparatuses with multiple antennas and corresponding multiple transmit paths and/or receive paths may sometimes be inefficient from an energy-consumption point of view. Accordingly, an object of the present invention is to facilitate a reduction of energy consumption in such radio-communication apparatuses.
According to a first aspect, there is provided a radio-communication circuit for a radio-communication apparatus having a plurality of antennas for communication over spatially multiplexed channels. The radio-communication circuit comprises a plurality of signal paths for connection to the plurality of antennas of the radio-communication apparatus, wherein the signal paths are either receive or transmit paths, and each signal path has an enabled and a disabled mode. The radio-communication circuit further comprises a control unit for setting the mode of each of the signal paths, wherein the control unit is adapted to control which of the signal paths are set in the enabled mode at least based on an obtainable performance gain due to multi-antenna processing.
Said obtainable performance gain may be an obtainable spatial multiplexing gain.
The control unit may be adapted to determine the spatial multiplexing gain based on estimated channel responses of the channels. Furthermore, the control unit may be further adapted to determine the spatial multiplexing gain based on estimated noise-and-interference power values per antenna per channel. In addition, the control unit may be further adapted to determine the spatial multiplexing gain based on noise-and-interference covariance values between channels.
In some embodiments, said signal paths may be transmit signal paths, the radio-communication apparatus may be adapted to communicate according to a time-division duplex scheme, and the control unit may be adapted to approximate transmit channel responses with corresponding receive channel responses.
The control unit may be further adapted to control which of the signal paths are set in the enabled mode based on an energy level of an energy source of the radio-communication apparatus.
The control unit may be further adapted to control which of the signal paths are set in the enabled mode based on a type of a current communication session of the radio-communication apparatus.
The control unit may be further adapted to control which of the signal paths are set in the enabled mode based on a diversity gain.
According to a second aspect, there is provided a radio-communication apparatus comprising a plurality of antennas and at least one radio-communication circuit according to the first aspect.
The number of radio-communication circuits may be at least two, at least one of the radio-communication circuits may be a radio-transmitter circuit, in which the signal paths are transmit paths, and at least one of the radio-communication circuits may be a radio-receiver circuit, in which the signal paths are receive paths.
The radio-communication apparatus may e.g. be a mobile terminal or a radio base station.
According to a third aspect, there is provided a method of controlling a radio-communication circuit for a radio-communication apparatus having a plurality of antennas for communication over spatially multiplexed channels. The radio-communication circuit comprises a plurality of signal paths for connection to the plurality of antennas of the radio-communication apparatus, wherein the signal paths are either receive or transmit paths, and each signal path has an enabled and a disabled mode. The method comprises controlling which of the signal paths are set in the enabled mode at least based on an obtainable performance gain due to multi-antenna processing.

Said obtainable performance gain may be an obtainable spatial multiplexing gain.

The method may comprise determining the spatial multiplexing gain based on estimated channel responses of the channels.

The method may further comprise determining the spatial multiplexing gain based on estimated noise-and-interference power values per antenna per channel.

The method may further comprise determining the spatial multiplexing gain based on noise-and-interference covariance values between channels.

In some embodiments, the signal paths may be transmit signal paths, the radio-communication apparatus may be adapted to communicate according to a time-division duplex scheme, and the method may comprise approximating transmit channel responses with corresponding receive channel responses.

The method may further comprise controlling which of the signal paths are set in the enabled mode based on an energy level of an energy source of the radio-communication apparatus.

The method may further comprise controlling which of the signal paths are set in the enabled mode based on a type of a current communication session of the radio-communication apparatus.

The method may further comprise controlling which of the signal paths are set in the enabled mode based on a diversity gain.

According to a fourth aspect, there is provided a computer program product comprising computer program code means for executing the method according to the third aspect when said computer program code means are run by a programmable control unit of the radio-communication circuit.

According to a fifth aspect, there is provided a computer readable medium having stored thereon a computer program product comprising computer program code means for executing the method according to the third aspec when said computer program code means are run by a programmable control unit of the radio-communication circuit.

Further embodiments of the invention are defined in the dependent claims.

It should be emphasized that the term "comprises/comprising" when used in this specification is taken to specify the presence of stated features, integers, steps, or components, but does not preclude the presence or addition of one or more other features, integers, steps, components, or groups thereof.

## Brief Description of the Drawings

Further objects, features and advantages of embodiments of the invention will appear from the following detailed description, reference being made to the accompanying drawings, in which:

Fig. 1 schematically illustrates an environment where embodiments of the present invention may be employed;
Fig. 2 is a simplified block diagram of a radio-communication apparatus, comprising a radio-communication circuit, according to an embodiment of the present invention;
Figs. 3-7 are flow charts for embodiments of the present invention;
Fig. 8 is a block diagram of a radio-communication apparatus according to an embodiment of the present invention; and
Fig. 9 schematically illustrates a computer-readable medium and a programmable control unit according to an embodiment of the present invention.

## Detailed Description

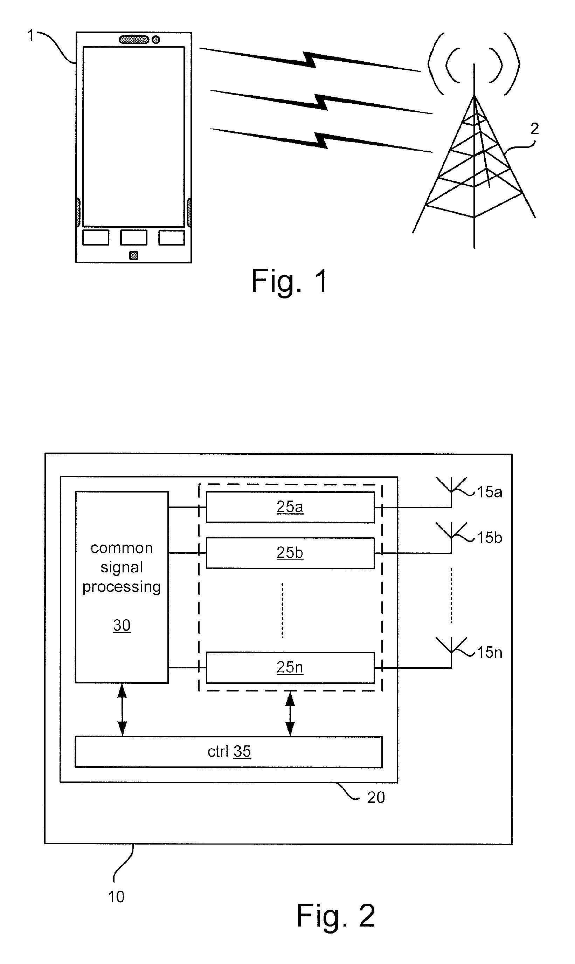

Fig. 1 schematically illustrates an environment where embodiments of the present invention may be employed. In Fig. 1, a mobile terminal (MT) 1 communicates wirelessly with a radio-base station (BS) 2. The MT 1 and the BS 2 are non-limiting examples of what is generically referred to below as a "radio-communication apparatus". The communication between the BS2 and the MT 1 may be multipath/multiantenna communication.

Fig. 2 is a simplified block diagram of such a radio-communication apparatus 10 according to an embodiment of the present invention. The radio-communication apparatus 10 comprises a plurality of antennas 15a-n. The number of antennas 15a-n may be different in different embodiments. Hence, the letter "n", when used in reference signs in this specification, is intended as a parameter which may adopt different "values" (i.e. represent different letters) in different embodiments. It is not intended to indicate that the number of elements of a particular kind (e.g. antennas 15a-n) necessarily is 14 (n being the 14th letter in the alphabet).

In communication systems with spatial multiplexing, multiple antennas on both the transmitter side and the receiver side are utilized to effectuate transmission (e.g. voice transmission and/or data transmission) over a plurality of parallel, or spatially multiplexed, communication channels. The overall communication capacity can thereby be improved compared with single-antenna systems. The improvement gained is normally referred to as "spatial multiplexing gain". Hence, the presence of a plurality of antennas 15a-n in the radio-communication apparatus 10 enables communication over such spatially multiplexed communication channels. Hence, the term spatial multiplexing refers to the possibility to see the air interface as comprising several separate physical channels and requires multiple antennas both at the receiver and at the transmitter. The spatial multiplexing gain is the improvement, according to some performance metric, due to employing spatial multiplexing. Consider for example a case with two spatially multiplexed channels. If the degree of dependence between the spatially multiplexed channels is relatively low (i.e. the channels are more or less mutually independent), the spatial multiplexing gain is relatively high. On the other hand, if the degree of dependence is relatively high (i.e. the channels are more or less mutually dependent), the spatial multiplexing gain is relatively low. In the latter case, less is gained in terms of communication capacity by using the two channels compared with the former case where the degree of dependence between the spatially multiplexed channels is relatively low. Hence, an indicator or measure of mutual dependence between channels can be used as an indicator or measure of spatial multiplexing gain. The basic principles of spatial multiplexing are known in the art and therefore not discussed in further detail herein.

Multiple antennas on the transmitter and/or receiver side (not necessarily both) can be utilized for performance gain also without spatial multiplexing, e.g. for so called transmit diversity and/or receive diversity for improving the SINR (Signal-to-Interference-and-Noise ratio). Furthermore, multi-antenna processing may offer interference-suppression gains, e.g. as for a receiver capable of meeting "Enhanced performance requirements type 3i" in the specification 3GPP TS25.101 V9.2.0, where a receiver with two antennas may show improved performance by suppressing the interference from one or more dominant interfering radio base stations.

In the embodiment illustrated in Fig. 2, the radio-communication apparatus 10 comprises a radio-communication circuit 20. The radio-communication circuit 20 may be either a radio-transmitter circuit or a radio-receiver circuit. The radio-communication circuit 20 comprises a plurality of signal paths 25a-n for connection to the plurality of antennas 15a-n of the radio-communication apparatus 10. Each of the signal paths 25a-n may be adapted to be connected to a unique one of the antennas 15a-n. This is illustrated with an example in Fig. 2, wherein the signal path 25 a is connected to the antenna 15a, the signal path 25b is connected to the antenna 15b, etc. The signal paths 25a-n are either receive paths (in the case of a radio-receiver circuit) or transmit paths (in the case of a radio-transmitter circuit). Each of the signal paths 25a-n may e.g. comprise elements such as data converters (i.e. analog-to-digital converters (ADC) or digital-to-analog converters (DACs)), mixers for frequency translation, low-noise amplifiers (LNAs), filters, power amplifiers (PAs), variable-gain amplifiers, automatic gain-control (AGC) loops, and/or various digital circuitry, for enabling radio communication (i.e. radio transmission or reception, whatever the case may be).

Each signal path 25a-n has an enabled and a disabled mode. In the enabled mode, the elements of a signal path 25a-n are configured in such a way that the signal path 25a-n is operable for radio communication. In the disabled state, one or more (possibly all) of the elements of the signal path 25a-n are disabled for saving energy, whereby the signal path 25a-n is not operable for radio transmission or reception. Disabling an element of a signal path may comprise one or more of disconnecting or switching off a power supply of the element and disconnecting or switching off a clock signal of the element. In some embodiments, a disabled signal path may be used for other purposes than communication, e.g. for sensing operations. For example, a disabled signal path may be periodically operated (with necessary elements enabled) for channel-response estimation, etc.

As indicated in Fig. 2, the radio-communication circuit 20 may have a common signal processing unit 30 adapted to generate input signals to (in the case of a radio-transmitter circuit) or to process output signals from (in the case of a radio-receiver circuit) the signal paths 25a-n. In some embodiments, the common signal processing unit 30 may be adapted to perform multiplexing or demultiplexing of data. In some embodiments where the radio-communication circuit 20 is a radio-transmitter circuit, the common signal processing unit 30 may be adapted to perform beamforming or precoding when more than one of the signal paths 25a-n are enabled. In some embodiments where the radio-communication circuit 20 is a radio-receiver circuit, the common signal processing unit 30 may be adapted to perform data combining across the signal paths 25a-n to achieve receive antenna diversity gain and/or interference-suppression gain when more than one of the signal paths 25a-n are enabled.

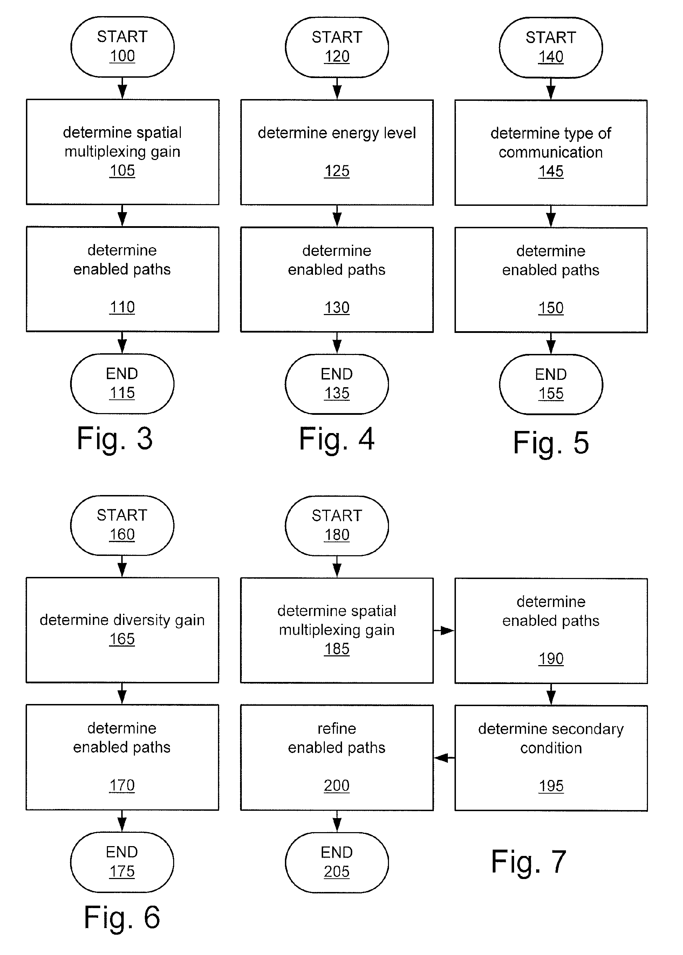

Moreover, the radio-communication circuit 20 comprises a control unit 35. The control unit 35 is adapted to set the mode (enabled/disabled) of each of the signal paths 25a-n. According to embodiments of the present invention, the control unit 35 is adapted to control which of the signal paths 25a-n are set in the enabled mode at least based on an obtainable performance gain due to multi-antenna processing. In some embodiments and examples presented in the following, the obtainable performance gain is the obtainable spatial multiplexing gain. However, other types of obtainable performance gain, such as receive or transmit diversity gain, e.g. as described with reference to Fig. 6, or interference suppression gain may be considered in other embodiments.

Qualitatively speaking, the control unit 35 may be adapted to disable signal paths that do not contribute to the spatial multiplexing gain, and/or the contributions of which are only negligible. Thereby, energy may be saved without any loss, or with only a negligible (or under the circumstances acceptable) loss, of communication performance.

An example of how the control unit 35 may be adapted to operate according to embodiments of the present invention is illustrated with a flowchart in Fig. 3. In step 100, the operation is started. In step 105, the control unit 35 determines, or estimates, the obtainable spatial multiplexing gain for different combinations of enabled signal paths 25a-n. The control unit 35 then continues, in step 110, by determining and controlling which signal paths that should be enabled based on the obtainable spatial multiplexing gains determined in step 105. In some embodiments, the determination may be based on predetermined energy-optimization rules or criteria, which may e.g. define what is considered as a negligible, or acceptable, loss of communication performance for a given amount of energy saving. Thereafter, the operation is ended in step 115.

The control unit 35 may be adapted to determine the spatial multiplexing gain based on estimated channel responses of the channels. According to some embodiments, a usable rank of a channel matrix may be used for this purpose. A definition that is used in some embodiments described below for the useable rank is based on singular values of a matrix B derived from the channel matrix. In the following, $\omega_k$ denotes the singular values of the matrix $B$ normalized such that the largest $\omega_k = 1$. According to an embodiment, the useable rank is defined as the number of $\omega_k$ for which $\omega_k > \tau$, wherein $\tau$ is a threshold value. Various alternatives for the matrix $B$ are described below in the context of specific embodiments.

For example, in the case that the radio-communication circuit 20 is a radio-receiver circuit (i.e. the signal paths 25a-n are receive paths), a downlink channel matrix H may be defined as

$$H = \begin{bmatrix} h_{1,1} & h_{1,2} & \cdots & h_{1,M} \\ h_{2,1} & h_{2,2} & \cdots & h_{2,M} \\ \vdots & \vdots & \ddots & \vdots \\ h_{N,1} & h_{N,2} & \cdots & h_{N,M} \end{bmatrix}$$

$$(\text{Eq. 1})$$

wherein $h_{i,j}$ is an estimated downlink channel response from an ith transmit path of a transmitter communicating with the radio-communication circuit 20 to a jth one of the signal paths 25a-n of the radio-communication circuit 20. Hence, the indices $i$ and $j$ are used for identifying a particular transmit path of the transmitter and a particular one of the signal paths 25a-n of the radio-communication circuit 20, respectively. The channel response $h_{i,j}$ is an $n_i$ by 1 vector, where $n_i$ is an integer associated with the ith row of H (i.e. associated with said ith transmit path). The channel response $h_{i,j}$ may be a vector of complex channel coefficients for $n_i$ frequency bins in a frequency-domain representation, thereby representing a frequency response of the channel. Alternatively, the channel response $h_{i,j}$ may be a time-domain impulse response of length $n_i$, which is related to the frequency response via the discrete Fourier transform (DFT). Since the DFT operation can be expressed as a multiplication with a unitary matrix, the rank of the matrix is the same regardless of whether the time-domain or the frequency-domain representations of the channel responses are considered. Furthermore, in the time-domain representation, a simplified representation can be obtained by including only the coefficients corresponding to significant path delays.

In order to determine the usable rank, the matrix $H^H H$ may be used as the matrix B mentioned above, wherein $H^H$ denotes the Hermitian transpose of the matrix H.

Similarly, in the case where the radio-communication circuit 20 is a radio-transmitter circuit (i.e., the signal paths 25a-n are transmit paths), an uplink channel matrix $U$ may be defined as

$$U = \begin{bmatrix} u_{1,1} & u_{1,2} & \cdots & u_{1,M} \\ u_{2,1} & u_{2,2} & \cdots & u_{2,M} \\ \vdots & \vdots & \ddots & \vdots \\ u_{N,1} & u_{N,2} & \cdots & u_{N,M} \end{bmatrix}$$

$$(\text{Eq. 2})$$

wherein $u_{i,j}$ is an estimated uplink channel response to an ith receive path of a receiver communicating with the radio-communication circuit 20 from a jth one of the signal paths 25a-n of the radio-communication circuit 20. Hence, the indices i and j are used for identifying a particular receive path of the receiver and a particular one of the signal paths 25a-n of the radio-communication circuit 20, respectively. The channel response $u_{i,j}$ may be on the same forms as the

channel responses $h_{i,j}$ described above. In order to determine the usable rank, the matrix $U^H U$ may be used as the matrix B mentioned above.

Methods for estimating channel responses are known in the art. The channel response $h_{i,j}$ and $u_{i,j}$ may be determined, or estimated, using any such known method.

According to some embodiments, the control unit 35 may be further adapted to determine the spatial multiplexing gain based on estimated noise-and-interference power values per antenna 15a-n per channel, in addition to the estimated channel responses mentioned above. For example the usable rank may instead be determined based on singular values of the matrix $H^H D^{-1} H$ (in the receiver case) or $U^H D^{-1} U$ (in the transmitter case), wherein D is a diagonal matrix of estimated noise-and-interference power values per antenna 15a-n per channel. In this case, the matrix $H^H D^{-1} H$ or $U^H D^{-1} U$ may be used as the matrix B mentioned above.

In addition to the estimated noise-and-interference power values per antenna 15a-n per channel, the control unit may further be adapted to determine the spatial multiplexing gain based on noise-and-interference covariance values between channels. For example the usable rank may be instead be determined based on singular values of the matrix $H^H R^{-1} H$ (in the receiver case) or $U^H R^{-1} U$ (in the transmitter case), wherein R is a covariance matrix of noise-and-interference covariance values. In this case, the matrix $H^H R^{-1} H$ or $U^H R^{-1} U$ may be used as the matrix $B$ mentioned above. Note that the diagonal of the matrix $R$ corresponds to the matrix $D$ described above. Methods for determining, or estimating, the covariance matrix $R$ are known, and any such known method may be employed for determining $R$. For example, the covariance matrix R may be determined in a demodulator weight-computation process, and be reused for the determination of the usable rank.

A channel with a relatively strong channel response may sometimes be accompanied by relatively strong noise and interference. An advantage of the embodiments above that utilizes the matrix $R$ or the matrix $D$ in the determination of the matrix $B$, compared with the embodiment that utilizes $H^H H$ or $U^H U$ as the matrix $B$, is that not only the strength of the channel responses but also the noise and interference is accounted for. The noise and interference is most accurately accounted for in the embodiment that utilizes the matrix $R$. For this alternative, the singular values $\omega_k$ represent the SINRs of the spatially multiplexed channels. On the other hand, the embodiment with the least computational complexity is the one that utilizes $H^H H$ or $U^H U$ as the matrix $B$. The embodiment that utilizes the matrix D can be seen as a trade-off that has a lower computational complexity than the embodiment that utilizes the matrix R and better accounts for noise and interference than the one that utilizes $H^H H$ or $U^H U$ as the matrix $B$.

The values of $\omega_k$ indicate the degree of independence between spatially multiplexed channels, and are thus indicators of the obtainable spatial multiplexing gain. The useable rank measures the number of "useful" spatially multiplexed channels, or the number of "satisfactorily independent channels". In order to obtain m spatially multiplexed channels, the use of $m$ (enabled) paths on the transmitter side and m (enabled) paths on the receiver side is needed. Hence, increasing the number of spatially multiplexed channels requires enabling additional signal paths 25a-n, and thus an increased power consumption. If the number of currently enabled signal paths 25a-n exceeds the useable rank, this means that one or more of the spatially multiplexed channels is not "useful" (does not provide enough spatial multiplexing gain), and thus the number of enabled signal paths 25a-n could be reduced for saving energy. A channel is, in accordance with some embodiments of the present invention, considered "useful" if the added spatial multiplexing gain due to the presence of the channel is considered worth the resulting extra power consumption. The value of $\tau$, which determines the limit for whether or not a channel is "useful", could thus be determined, from application to application, based on how much added spatial multiplexing gain is needed to motivate the additional power consumption, or, conversely, how large loss of spatial multiplexing gain that is acceptable for a given power saving that results from disabling a signal path.

Which of the signal paths 25a-n that should be set in the enabled mode may e.g. be determined by the control unit 35 by trying and evaluating different combinations of enabled signal paths 25a-n. For example, the control unit 35 may be adapted to select the combination of enabled signal paths that results in the highest useable rank under the constraint that the number of signal paths 25a-n thus enabled does not exceed the useable rank. The control unit 35 may further be adapted to, if several such combinations resulting in the same highest useable rank exist, select one of these combinations based on the individual singular values $\omega_k$ of the different combinations. For example, the control unit 35 may be adapted select the combination that has the highest average value of $\omega_k$, or the combination for which the lowest $\omega_k$ is the highest among the combinations that has the same highest useable rank. Other alternatives for selecting which of the signal paths 25a-n that should be set in the enabled mode based on the values of $\omega_k$ are possible as well.

Another alternative is to consider diagonal elements of the matrix B. In each of the alternatives for the matrix B described above, the diagonal element in the $j$th row/column is associated with the above-mentioned $j$th one of the signal paths 25a-n. The control unit 35 may e.g. be adapted to, if the number of currently enabled signal paths 25a-n is higher than the useable rank such that one or more of the signal paths could be disabled, disable the one or ones of the signal paths 25a-n that have the lowest values of the associated diagonal elements.

The control of which of the signal paths 25a-n are set in the enabled state may be updated on a regular basis in order to account for varying channel conditions that may in turn lead to varying obtainable spatial-multiplexing gain. In order to provide a more reliable metric, the useable rank values described above may be filtered over time. A suitable time constant for the filtering may be determined based on a trade off between ability of filtering out temporary effects of noise on the estimation of the useable rank and ability to track varying channel responses. The first ability is improved with increasing time constant, whereas the latter is improved with decreased time constant.

In embodiments taking into account the obtainable interference-suppression gain, the obtainable interference-suppression gain can be determined in different ways. In one embodiment, a channel matrix analogous to the one defined in (Eq.1) can be augmented to include also the channel response from one or more interfering radio transmitters. Based on this, a metric that represents the achievable interference suppression gain for a particular receiver architecture can be calculated.

The control unit 35 may, in some embodiments, be further adapted to control which of the signal paths 25a-n are set in the enabled mode based one or more secondary conditions not related to the spatial multiplexing gain. For example, the control unit 35 may have a mode of operation wherein the control unit 35 is adapted to control which of the signal paths 25a-n are set in the enabled mode based on the spatial multiplexing gain as described above, and one or more alternative modes of operation, in which the control unit 35 is operable to control which of the signal paths 25a-n are set in the enabled mode based on such secondary conditions independently of the spatial multiplexing gain. Examples of such alternative modes of operation are illustrated with flowcharts in Figs. 4-6. Alternatively, the control unit 35 may be adapted to control which of the signal paths 25a-n are set in the enabled mode based on the spatial multiplexing gain in combination with one or more such secondary conditions. An example of such an embodiment is illustrated in Fig. 7.

Fig. 4 illustrates an alternative mode of operation of the control unit 35, in which the control unit 35 is adapted to control which of the signal paths 25a-n are set in the enabled mode based on an energy level of an energy source (not shown), e.g. a battery, of the radio-communication apparatus 10. The operation is started in step 120. In step 125, the energy level of the energy source is determined by the control unit 35. Then, in step 130, the control unit 35 determines and controls which of the signal paths 25a-n are set in the enabled mode based on the determined energy level. For example, if the energy level is below a threshold value, which may be a predetermined threshold value, the control unit 35 may be adapted to set an upper limit on the number of signal paths 25a-n that are in the enabled mode at the same time. Thereby, excessive draining of the energy source may be avoided when the energy level is "low" (i.e. below said threshold value). The operation is ended in step 135.

Fig. 5 illustrates an alternative mode of operation of the control unit 35, in which the control unit 35 is adapted to control which of the signal paths 25a-n are set in the enabled mode based on a type of a current communication session of the radio-communication apparatus 10. The operation is started in step 140. In step 145, the type of the current communication session of the radio-communication apparatus 10 is determined by the control unit 35. Then, in step 150, the control unit 35 determines and controls which of the signal paths 25a-n are set in the enabled mode based on the determined type of the current communication session of the radio-communication apparatus 10. For example, upon determining that the current communication session is an emergency call (which is an example of a type according to an embodiment of the present invention), the control unit 35 may be adapted to set an upper limit on the number of signal paths 25a-n that are in the enabled mode at the same time. Thereby, excessive draining of the energy source may be avoided in an emergency. Other examples of types may include different types of communication sessions having different bit-rate requirements. For example, if the available bit rate is considerably higher than the required bit-rate, an energy saving may be obtainable by disabling some of the currently enabled signal paths. Hence, the control unit 35 may be adapted to control which of the signal paths 25a-n are set in the enabled mode based on a bit-rate requirement of the determined type of the current communication session. For example, the control unit 35 may be adapted to perform the control such that the available bit rate is within a predetermined interval associated with the determined type. The lower end of the interval may be selected such that the available bit-rate meets the bit-rate requirement of the type, and the upper end of the interval may be selected such that the available bit rate does not become excessively high compared with the bit-rate requirement of the type. The operation is ended in step 155.

Diversity may be used to reduce the impact of both fading and noise and interference. The diversity gain depends on the degree of channel independence. Fig. 6 illustrates an alternative mode of operation of the control unit 35, in which the control unit 35 is adapted to control which of the signal paths 25a-n are set in the enabled mode based on based on a diversity gain. The operation is started in step 160. In step 165, the obtainable diversity gains for different combinations of enabled signal paths are determined by the control unit 35. Then, in step 160, the control unit 35 determines and controls which of the signal paths 25a-n are set in the enabled mode based on the determined obtainable diversity gains. The operation is ended in step 155. The diversity gain can be determined based on SNR measurements on all signal paths or combinations thereof, on an estimated correlation of noise and interference, and/or an estimated correlation of channel variations between different signal paths 25a-n. Such determination of diversity gain is known in the art and not further described in any detail herein. The control unit 35 may be adapted to determine which of the signal paths 25a-n that provide no contributions, or only negligible contributions, to the diversity gain. Furthermore, the control unit 35 may be adapted to set these signal paths 25a-n in the disabled mode for saving energy.

Fig. 7 illustrates an embodiment wherein the control unit 35 is adapted to control which of the signal paths 25a-n are set in the enabled mode based on the spatial multiplexing gain in combination with one or more secondary conditions. The operation is started in step 180. In step 185, the control unit 35 determines, or estimates, the obtainable spatial multiplexing gain for different combinations of enabled signal paths 25a-n as discussed above with reference to step 105 (Fig. 3). The control unit 35 then continues, in step 190, by determining which signal paths that should be enabled based on the obtainable spatial multiplexing gains determined in step 185, as discussed above with reference to step 110 (Fig. 3). Thereafter, the control unit 35 continues with determining a secondary condition in step 195. The secondary condition may e.g. be one of those considered in Figs. 4-6, e.g. an energy level of an energy source of the radio-communication apparatus 10 (as in Fig. 4), a type of a current communication session of the radio-communication apparatus 10 (as in Fig. 5), or a diversity gain (as in Fig. 6). Furthermore, in step 200, the control unit 35 refines the selection of which of the signal paths 25a-n are set in the enabled mode based on the secondary condition determined in step 195. Possible outcomes of step 200 are either that all the signal paths 25a-n selected to be set in the enabled mode in step 190 are still selected to be set in the enabled mode after step 200, or alternatively, if the secondary condition determined in step 195 so dictates, that only a subset of the signal paths 25a-n selected to be set in the enabled mode in step 190 are still selected to be set in the enabled mode after step 200. The operation is ended in step 205.

The flowcharts in Figs. 3-7 are only examples. For example, in each of Figs. 4-7, only a single secondary condition is considered. According to some embodiments, a plurality of such secondary conditions may be considered in combination for controlling which of the signal paths 25a-n are set in the enabled mode. Furthermore, some steps illustrated in the figures may be performed in a different order. For example, with reference to Fig. 7, steps 185 and 195 may switch places, such that the selection of the signal paths to be set in the enabled mode in step 190 is based on the secondary condition, and the refinement of the selection performed in step 200 is based on the spatial-multiplexing gain.

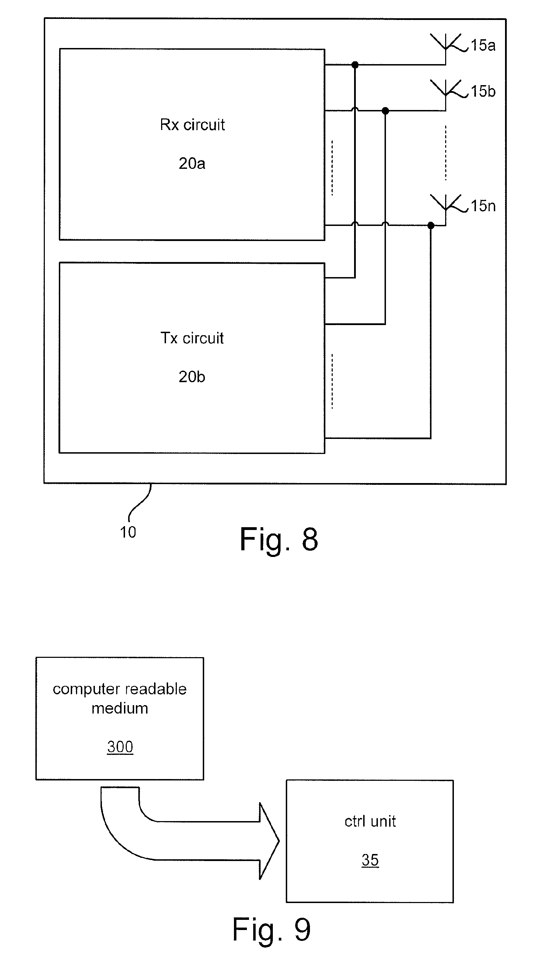

According to some embodiments of the present invention, the radio-communication apparatus 10 may comprise more than one radio-communication circuit of the type referred to with the reference sign 20 in Fig. 2. According to some of these embodiments, at least one of these radio-communication circuits is a radio-transmitter circuit, in which the signal paths 25a-n are transmit paths, and at least one of the radio-communication circuits is a radio-receiver circuit, in which the signal paths are receive paths. This is illustrated in Fig 8, wherein the radio-communication apparatus 10 comprises two radio-communication circuits of the type referred to with the reference sign 20 in Fig. 2, one of which is a radio-receiver circuit 20a, and one of which is a radio-transmitter circuit 20b.

In the embodiment illustrated in Fig. 8, the antennas 15a-n are shared between the radio-receiver circuit 20a and the radio transmitter circuit 20b. Hence, in this case, all antennas 15a-n are adapted to operate both as transmit and receive antennas. Duplex filters (not shown) may be needed in some applications, for example when frequency-division duplex (FDD) is employed, in order to allow antenna sharing between the radio-receiver circuit 20a and radio-transmitter circuit 20b. In alternative embodiments, the radio-communication apparatus 10 may have separate dedicated antennas for the radio-receiver circuit 20a and the radio transmitter circuit 20b. In further alternative embodiments, the radio-communication apparatus 10 may have some antennas that are dedicated to the radio-receiver circuit 20a and/or some antennas that are dedicated to the radio transmitter circuit 20b, and, in addition thereto, some antennas that are shared between the radio-receiver circuit 20a and the radio transmitter circuit 20b.

If the radio-communication apparatus 10 is adapted to communicate according to a time-division duplex (TDD) scheme, the determination of the transmit channel responses $u_{i,j}$ described above can be simplified for the radio-transmitter circuit 20b. In that case it can be utilized that the channel response between one antenna of the radio-communication apparatus 10 and one antenna of another radio-communication apparatus, with which the radio-communication apparatus 10 is communicating, is approximately the same regardless of the direction of the communication (i.e. from the radio-communication apparatus 10 to the other radio-communication apparatus, or vice versa). Hence, a transmit channel response for the radio-transmitter circuit 20b can be approximated with a corresponding receive channel response determined for the radio-receiver circuit 20a. Accordingly, the control unit 35 of the radio-transmitter circuit 20b may be adapted to approximate transmit channel responses with corresponding receive channel responses.

According to some embodiments of the present invention, the radio-communication apparatus 10 (Figs. 2 and 8) is a mobile terminal, such as the mobile terminal 1 (Fig. 1). According to other embodiments of the present invention, the radio-communication apparatus 10 (Figs. 2 and 8) is a radio base station, such as the radio base station 2 (Fig. 1).

According to some embodiments of the present invention, there is provided a method of controlling the radio-communication circuit 20 (Fig. 2). The method may e.g. be executed by the control unit 35 (Fig. 2). The method comprises controlling which of the signal paths 25a-n are set in the enabled mode at least based on an obtainable performance gain due to multi-antenna processing. In some embodiments and examples presented in the following, the obtainable performance gain is the obtainable spatial multiplexing gain. However, other types of obtainable performance gain, such as receive or transmit diversity gain or interference suppression gain may be considered in other embodiments.

In accordance with what is described above in the context of embodiments of the radio-communication circuit 20, the method may comprise determining the spatial multiplexing gain based on estimated channel responses of the channels.

Furthermore, also in accordance with what is described above in the context of embodiments of the radio-communication circuit 20, the method may further comprise determining the spatial multiplexing gain based on estimated noise-and-interference power values per antenna 15a-n per channel. In addition thereto, also in accordance with what is described above in the context of embodiments of the radio-communication circuit 20, the method may further comprise determining the spatial multiplexing gain based on noise-and-interference covariance values between channels.

In accordance with what is described above with reference to the flowchart in Fig. 7, the method may comprise controlling which of the signal paths 25a-n are set in the enabled mode based on one or more secondary conditions in addition to the spatial multiplexing gain. As described above, the secondary conditions may include an energy level of an energy source of the radio-communication apparatus 10, a type of a current communication session of the radio-communication apparatus 10, and/or a diversity gain.

In embodiments where the radio-communication circuit 20 is a radio-transmitter circuit (e.g. the radio transmitter circuit 20b in Fig. 8), wherein the signal paths 25a-n are transmit signal paths, and the radio-communication apparatus 10 is adapted to communicate according to a TDD scheme, the method may comprise approximating transmit channel responses with corresponding receive channel responses, as discussed above in the context of Fig. 8.

The control unit 35 (Fig. 2) may be implemented as an application-specific hardware unit. Alternatively, the control unit 35 or parts thereof may be implemented using one or more configurable or programmable hardware units, such as but not limited to one or more field-programmable gate arrays (FPGAs), processors, or microcontrollers. Therefore, the control unit 35 may be a programmable control unit. Hence, embodiments of the present invention may be embedded in a computer program product, which enables implementation of the method and functions described herein. Therefore, according to embodiments of the present invention, there is provided a computer program product, comprising instructions arranged to cause the programmable control unit 35 to perform the steps of any of the embodiments of the method described above. The computer program product may comprise program code which is stored on a computer readable medium 300, as illustrated in Fig. 9, which can be loaded and executed by the programmable control unit to cause it to perform the steps of any of the embodiments of the method described above.

The present invention has been described above with reference to specific embodiments. However, other embodiments than the above described are possible within the scope of the invention. Different method steps than those described above, performing the method by hardware or software, may be provided within the scope of the invention. The different features and steps of the embodiments may be combined in other combinations than those described. The scope of the invention is only limited by the appended patent claims.

**Claims**

1.  A radio-communication circuit (20, 20a, 20b) for a radio-communication apparatus (1, 2, 10) having a plurality of antennas (15a-n) for communication over spatially multiplexed channels, wherein the radio-communication circuit (20, 20a, 20b) comprises:

    a plurality of signal paths (25a-n) for connection to the plurality of antennas (15a-n) of the radio-communication apparatus (1, 2, 10), wherein the signal paths (25an) are either receive or transmit paths, and each signal path (25a-n) has an enabled and a disabled mode; and
    a control unit (35) for setting the mode of each of the signal paths (25a-n), wherein the control unit (35) is adapted to control which of the signal paths (25a-n) are set in the enabled mode at least based on an obtainable performance gain due to multi-antenna processing.

2.  The radio-communication circuit according to claim 1, wherein said obtainable performance gain is an obtainable spatial multiplexing gain.

3.  The radio-communication circuit (20, 20a, 20b) according to claim 2, wherein the control unit (35) is adapted to determine the spatial multiplexing gain based on estimated channel responses of the channels.

4.  The radio-communication circuit (20, 20b) according to claim 3, wherein said signal paths (25a-n) are transmit signal paths, the radio-communication apparatus (1, 2, 10) is adapted to communicate according to a time-division duplex scheme, and the control unit (35) is adapted to approximate transmit channel responses with corresponding receive channel responses.

5.  The radio-communication circuit (20, 20a, 20b) according to claim 3 or 4, wherein the control unit (35) is further adapted to determine the spatial multiplexing gain based on estimated noise-and-interference power values per antenna (15a-n) per channel.

6. The radio-communication circuit (20, 20a, 20b) according to claim 5, wherein the control unit (35) is further adapted to determine the spatial multiplexing gain based on noise-and-interference covariance values between channels.

7. The radio-communication circuit (20, 20a, 20b) according to any of the claims 2-6, wherein the control unit (35) is further adapted to control which of the signal paths (25a-n) are set in the enabled mode based on an energy level of an energy source of the radio-communication apparatus (1, 2, 10).

8. The radio-communication circuit (20, 20a, 20b) according to any of the claims 2-7, wherein the control unit (35) is further adapted to control which of the signal paths (25a-n) are set in the enabled mode based on a type of a current communication session of the radio-communication apparatus (1, 2, 10).

9. The radio-communication circuit (20, 20a, 20b) according to any of the claims 2-8, wherein the control unit (35) is further adapted to control which of the signal paths (25a-n) are set in the enabled mode based on a diversity gain.

10. A radio-communication apparatus (1, 2, 10) comprising a plurality of antennas (15a-n) and at least one radio-communication circuit (20, 20a, 20b) according to any preceding claim.

11. The radio communication apparatus (1,2, 10) according to claim 10, wherein the number of radio-communication circuits (20a, 20b) is at least two, at least one of the radio-communication circuits (20a, 20b) is a radio-transmitter circuit (20b), in which the signal paths (25a-n) are transmit paths, and at least one of the radio-communication circuits (20a, 20b) is a radio-receiver circuit (20a), in which the signal paths (25a-n) are receive paths.

12. The radio-communication apparatus (1) according to claim 10 or 11, wherein the radio-communication apparatus (1) is a mobile terminal.

13. The radio-communication apparatus (2) according to claim 10 or 11, wherein the radio-communication apparatus (2) is a radio base station.

14. A method of controlling a radio-communication circuit (20, 20a, 20b) for a radio-communication apparatus (1, 2, 10) having a plurality of antennas (15a-n) for communication over spatially multiplexed channels, wherein the radio-communication circuit (20, 20a, 20b) comprises:

a plurality of signal paths (25a-n) for connection to the plurality of antennas (15a-n) of the radio-communication apparatus (1, 2,10), wherein the signal paths (25an) are either receive or transmit paths, and each signal path (25a-n) has an enabled and a disabled mode; and
the method comprises:

controlling which of the signal paths (25a-n) are set in the enabled mode at least based on an obtainable performance gain due to multi-antenna processing.

15. The method according to claim 14, wherein said obtainable performance gain is an obtainable spatial multiplexing gain.

16. The method according to claim 15, comprising determining the spatial multiplexing gain based on estimated channel responses of the channels.

17. The method according to claim 16, wherein said signal paths (25a-n) are transmit signal paths, the radio-communication apparatus (1,2,10) is adapted to communicate according to a time-division duplex scheme, and the method comprises approximating transmit channel responses with corresponding receive channel responses.

18. The method according to claim 16 or 17, further comprising determining the spatial multiplexing gain based on estimated noise-and-interference power values per antenna (15a-n) per channel.

19. The method according to claim 18, further comprising determining the spatial multiplexing gain based on noise-and-interference covariance values between channels.

20. The method according to any of the claims 15-19, further comprising controlling which of the signal paths (25a-n) are set in the enabled mode based on an energy level of an energy source of the radio-communication apparatus (1,2, 10).

21. The method according to any of the claims 15-20, further comprising controlling which of the signal paths (25a-n) are set in the enabled mode based on a type of a current communication session of the radio-communication apparatus (1,2, 10).

22. The method according to any of the claims 15-21, further comprising controlling which of the signal paths (25a-n) are set in the enabled mode based on a diversity gain.

23. A computer program product comprising computer program code means for executing the method according to any of the claims 14-22 when said computer program code means are run by a programmable control unit (35) of the radio-communication circuit (20, 20a, 20b).

24. A computer readable medium (300) having stored thereon a computer program product comprising computer program code means for executing the method according to any of the claims 14-22 when said computer program code means are run by a programmable control unit (35) of the radio-communication circuit (20, 20a, 20b).

Fig. 1

Fig. 2

START
100

determine spatial
multiplexing gain
105

determine
enabled paths
110

END
115

Fig. 3

START
120

determine energy level
125

determine
enabled paths
130

END
135

Fig. 4

START
140

determine type of
communication
145

determine
enabled paths
150

END
155

Fig. 5

START
160

determine diversity gain
165

determine
enabled paths
170

END
175

Fig. 6

START
180

determine spatial
multiplexing gain
185

determine
enabled paths
190

refine
enabled paths
200

determine secondary
condition
195

END
205

Fig. 7

Rx circuit

20a

Tx circuit

20b

15a

15b

15n

10

# Fig. 8

computer readable
medium

300

ctrl unit

35

# Fig. 9

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/023669 A1 (YAMAURA TOMOYA [JP] ET AL) 2 February 2006 (2006-02-02) * abstract * * paragraphs [0004], [0012] - [0028], [0032] - [0046], [0081] - [0094], [0110], [0135], [0149], [0152] * ----- | 1-24 | INV. H04B7/08 H04B7/06 H04B1/16 |
| X | WO 02/03568 A1 (IOSPAN WIRELESS INC [US]) 10 January 2002 (2002-01-10) * the whole document * ----- | 1-24 | |

TECHNICAL FIELDS
SEARCHED      (IPC)

H04B

The present search report has been drawn up for all claims

| Place of search | Date of completion of the search | Examiner |
|---|---|---|
| Munich | 23 August 2010 | Fernández Cuenca, B |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 10 15 7049

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2010

| Patent document cited in search report | Publication date | Patent family member(s) | | Publication date |
|---|---|---|---|---|
| US 2006023669 A1 | 02-02-2006 | CN<br>JP | 1750431 A<br>2006042075 A | 22-03-2006<br>09-02-2006 |
| WO 0203568 A1 | 10-01-2002 | AU<br>AU<br>WO | 5525301 A<br>7020701 A<br>0203557 A1 | 14-01-2002<br>14-01-2002<br>10-01-2002 |

EPO FORM P0459

For more details about this annex : see Official Journal of the European Patent Office, No. 12/82